Europäisches Patentamt

European Patent Office

Office européen des brevets

(11) Veröffentlichungsnummer: **0 341 596**
**A2**

## EUROPÄISCHE PATENTANMELDUNG

(21) Anmeldenummer: 89108125.9

(22) Anmeldetag: 05.05.89

(51) Int. Cl.⁴ **C09D 5/44**

(30) Priorität: 13.05.88 AT 1246/88

(43) Veröffentlichungstag der Anmeldung:
15.11.89 Patentblatt 89/46

(84) Benannte Vertragsstaaten:
DE ES FR GB IT

(71) Anmelder: **Vianova Kunstharz**
**Aktiengesellschaft**

**A-8402 Werndorf(AT)**

(72) Erfinder: **Paar, Willibald, Dr.**
**Schanzelgasse 19**
**A-8010 Graz(AT)**
Erfinder: **Schipfer, Rudolf, Dr.**
**Ernst Haeckelstrasse 53**
**A-8010 Graz(AT)**
Erfinder: **Gmoser, Johann**
**Radegunderstrasse 30**
**A-8045 Graz(AT)**

(54) **Kathodisch abscheidbare Elektrotauchlacke.**

㊗ Die Erfindung betrifft kathodisch abscheidbare Elektrotauchlacke. Diese enthalten als Bindemittel Kombinationen von kationischen filmbildenden Harzen mit organischen Titanverbindungen, die durch Umsetzung von Tetraalkylorthotitanaten oder Titanacetylacetonaten mit mindestens eine phenolische Hydroxylgruppe aufweisenden Verbindungen erhalten wurden.

Die eingebrannten Lackfilme zeigen eine hervorragende Korrosionsschutzwirkung auf nicht vorbehandeltem Stahlblech.

EP 0 341 596 A2

## Kathodisch abscheidbare Elektrotauchlacke

Die Erfindung betrifft kathodisch abscheidbare Elektrotauchlacke mit hervorragender Korrosionsschutzwirkung auf nicht vorbehandeltem Stahlblech.

Kathodisch abscheidbare Lacke weisen in der Regel auf zinkphosphatierten Substraten einer sehr guten Korrosionsschutz auf. Eine auf nicht vorbehandelten Stahlblechen ( = Blankblechen) ausreichende Korrosionsbeständigkeit ist bei den bekannten Produkten nur durch Zugabe von Bleiverbindungen zu erhalten.

Alle derzeit für diesen Zweck eingesetzten Bleiverbindungen haben jedoch in kathodisch abscheidbaren Elektrotauchlacken wesentliche Nachteile. Die als feste Stoffe eingesetzten Bleiverbindungen (Bleioxid bzw. basisches Bleisilikat) werden erst im Lack gelöst. Die Lacke bedürfen daher längerer Homogenisierungszeiten, bis die entsprechende Wirksamkeit des Bleisalzes als Katalysator gegeben ist. Die dabei gebildeten wasserlöslichen Salze befinden sich - ebenso wie andere dem Lack unmittelbar zugesetzte wasserlösliche Salze - zu einem wesentlichen Teil nicht in der Harzmicelle, sondern in der wäßrigen Phase des Lackes. Sie werden bei der elektrischen Abscheidung durch den im Film auftretenden Endosmoseeffekt, welcher eine Entwässerung des Filmes bewirkt, aus dem Film ausgewaschen oder auf dem Substrat als metallischer Niederschlag abgeschieden. Gelöste Salze werden überdies anteilig durch die bei Elektrotauchlackieranlagen eingesetzten Dialysevorrichtungen aus dem Bad entfernt und gegebenenfalls bei den Spülvorgängen in unkontrollierter Weise wieder ins Bad rückgeführt.

Die nichtwasserlöslichen Salze längerkettiger Fettsäuren sind im Harz löslich und verbleiben daher weitgehend in der Harzmicelle. Durch Hydrolyse entstehen jedoch titrierbare Mengen an wasserunlöslichen Fettsäuren, durch welche das Abscheidungsverhalten und die Badführung bei der Elektrotauchlackierung erheblich gestört werden.

Die Verwendung von Bleiverbindungen in Lacken wird in zunehmendem Maße von der Industrie aufgrund der Toxizität dieser Verbindungen und der damit verbundenen Entsorgungsprobleme abgelehnt. Andererseits stellt jedoch der ausreichende Blankblechkorrosionsschutz eine unabdingliche Forderung der Verbraucher kathodisch abscheidbarer Elektrotauchlacke, insbesonders in der Automobilindustrie, dar.

Für die Vernetzung von KTL-Bindemitteln durch Umesterung und Umurethanisierung können anstelle der Bleiverbindungen auch Tetraalkylorthotitanate und/oder Titanacetylacetonate verwendet werden. Diese Verbindungen sind jedoch hydrolyseanfällig und ergeben während der Alterung des Lackbades zunehmend Störungen in den abgeschiedenen Filmen.

Es wurde nun gefunden, daß bleifreie kationische Lacke, die hydrolysestabil sind und Filme mit einem ausgezeichneten Blankblechkorrosionsschutz ergeben, formuliert werden können, wenn die Bindemittel mit titanhältigen Verbindungen, die durch Umsetzung von Tetraalkylorthotitanaten und/oder Titanacetylacetonaten mit phenolischen Hydroxylgruppen aufweisenden Verbindungen erhalten wurden, kombiniert werden.

Die Erfindung betrifft demgemäß kathodisch abscheidbare Elektrotauchlacke, welche dadurch gekennzeichnet sind, daß sie als Bindemittel in partiell oder vollständig neutralisierter Form

(A) 70 bis 99.5 Gew.-%, vorzugsweise 80 bis 95 Gew.-%, eines kationischen filmbildenden Harzes sowie eines gegebenenfalls anteilig vorhandenen Zusatzharzes und/oder Pigmentanreibeharzes und

(B) 0,5 bis 30 Gew.-%, vorzugsweise 5 bis 20 Gew.-%, eines Umsetzungsproduktes eines Tetraalkylorthotitanates und/oder eines Titanacetylacetonates mit mindestens eine phenolische Hydroxylgruppe aufweisenden Verbindungen

enthalten, mit der Maßgabe, daß der Titangehalt der Kombination, bezogen auf Bindemittelfestkörpergehalt, 0.03 bis 3,0, vorzugsweise 0,1 bis 1,0, Gew.-% beträgt.

Die als Komponente (A) eingesetzten kationischen filmbildenden Harze sind in großer Anzahl aus der Fachliteratur bekannt. Es handelt sich dabei um basische Gruppen aufweisende Polykondensationsharze, Polymerisationsharze oder Polyadditionsharze. Die bevorzugten Harze basieren auf Polyepoxidharzen, die als deren Umsetzungsprodukte mit Aminoalkylierungsprodukten von Phenolen oder als Epoxidharz-Amin-Addukte in der Praxis verwendet werden.

Die erfindungsgemäß als Komponente (B) vorliegenden Titanverbindungen werden durch Umsetzung von Verbindungen, die mindestens eine phenolische Hydroxylgruppe aufweisen, mit einem Tetraalkylorthotitanat und/oder einem Titanacetylacetonat erhalten.

Als phenolische Hydroxylgruppen enthaltende Verbindungen werden gegebenenfalls alkyl-, aryl- oder aralkyl-substituierte Mono- oder Polyphenole, wie Phenol, Bisphenol A oder Bisphenol F, Alkylphenole mit 3 - 10 C-Atomen im Alkylrest, wie p-tert.Butylphenol oder Nonylphenol eingesetzt. Weiteres können auch die monomeren oder oligomeren Methylolphenole (Resole) oder Novolake eingesetzt werden. Auch höhermolekulare Phenolverbindungen, wie Aminoalkylierungsprodukte von verschiedenen Phenolen können für diesen Zweck eingesetzt werden, letztere sind beispielsweise in der AT-PS 382.160 beschrieben.

Die phenolischen Hydroxylgrupen dieser Verbindungen können vollständig oder anteilig mit der Titanverbindung umgesetzt werden.

Als Titanverbindungen werden Tetraalkylorthotitanate oder Titanacetylacetonate der Formel Ti(O-alkyl)$_n$-(acetylacetonat)$_2$ (n = 0 oder 2), wie sie im Handel erhältlich sind, verwendet.

Die Herstellung der erfindungsgemäß vorliegenden Titanverbindungen erfolgt durch Umsetzung der phenolischen Hydroxylgruppen tragenden Verbindung mit dem Titanalkoholat oder dem Titanacetylacetonat bei 80 bis 160 $^\circ$ C. Die Reaktion kann entweder in Substanz oder in Gegenwart von Lösemitteln, wie Glykolether oder Ketonen, erfolgen. Vor allem bei höhermolekularen Reaktionspartnern ist die Verwendung von Lösemitteln in vielen Fällen notwendig. Die Entfernung des bei der Reaktion gebildeten Alkohols bzw. Acetylacetons aus dem Reaktionsgemisch ist vorteilhaft.

Die erfindungsgemäß vorliegenden Titanverbindungen sind auch in der Kälte mit den verschiedenen kationischen Materialien auf der Basis von Kondensations-, Polymerisations- und Polyadditionsharzen einwandfrei verträglich. Durch ihre organophilen Molekülsegmente verbleiben sie im verdünnten wäßrigen Lackmaterial in der Harzphase und damit auch in einem durch die Endosmose bei der Elektrotauchlackierung weitgehend entwässerten Film. Die Produkte unterliegen bei längerer Lagerung bzw. in der Elektrotauchlackieranlage keiner hydrolytischen Spaltung. Die gegebenenfalls beim Einbrennen auftretenden Spaltprodukte sind flüchtig und ökologisch harmlos.

Die erfindungsgemäß vorliegenden Titanverbindungen können dem Basisharz zu jedem Zeitpunkt der Herstellung des Lackes zugesetzt werden. Die Zugabe kann in konzentrierter Form zum vorzugsweise wasserfreien Bindemittel, zu einem eventuell eingesetzten Pigmentanreibeharz, oder zur Pigmentpaste erfolgen. Bei Vorhandensein eventuell protonierbarer Gruppen können die Verbindungen aber auch in neutralisierter und mit Wasser und -oder Hilfslösemitteln verdünnter Form dem verdünnten Lackmaterial zugesetzt werden. Bei der Elektrotauchlakkeirung kann gegebenenfalls die verdünnte wäßrige Lösung der Titanverbindung auch während des Betriebes dem Badmaterial zugesetzt werden.

Die erfindungsgemäß vorliegenden Titanverbindungen werden in einer Menge verwendet, daß der Lack, bezogen auf den Bindemittelfestkörper 0,03 bis 3,0 %, vorzugsweise 0,1 bis 1,0 %, Titangehalt enthält.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

Herstellung der Komponente A

Komponente A 1

228 Tle Bisphenol A (1 Mol) werden mit 260 Tlen Diethylaminopropylamin (2 Mol) und 66 Tlen Paraformaldehyd, 91 % (2 Mol) in Gegenwart von 131 Tlen Toluol als Azeotropschleppmittel bis zur Abtrennung von 42 Tlen Reaktionswasser umgesetzt. Nach Kühlen auf 30 $^\circ$ C werden innerhalb 45 Minuten 608 Tle (2,0 Mol) eines mit 2-Ethylhexanol halbblockierten Toluylendiisocyanats zugegeben. Sobald ein NCO-Wert von praktisch 0 erreicht ist, wird das Produkt in 152 Tlen Diethylenglykoldimethylether gelöst.

1400 Tle dieser Lösung werden mit einer Lösung von 190 Tlen eines Epoxidharzes auf Basis von Bisphenol A (Epoxidäquivalentgewicht ca. 190) und 250 Tlen (1 Mol) eines Glycidylesters einer gesättigten, tertiären C$_9$ -C$_{11}$-Monocarbonsäure in 389 Tlen Diethylenglykoldimethylether versetzt und bei 95 bis 100 $^\circ$ C bis zu einem Epoxidwert von 0 umgesetzt. Das Produkt ist nach Zusatz von 40 Millimol Ameisensäure pro 100 g Festharz einwandfrei mit Wasser verdünnbar.

Komponente A 2

500 Tle eines Epoxidharzes auf Basis von Bisphenol A (Epoxidäquivalentgewicht ca. 500) werden in 214 Tlen Propylenglykolmonomethylether gelöst und bei 110 $^\circ$ C mit 83 Tlen eines Halbesters aus Phthalsäureanhydrid und 2-Ethylhexanol in Gegenwart von 0,5 g Triethylamin als Katalysator bis zu einer Säurezahl von weniger als 3 mg KOH/g reagiert. Dann werden 120 Tle eines NH-funktionellen Oxazolidins aus Aminoethylethanolamin, 2-Ethyl hexylacrylat und Formaldehyd, sowie 26 Tle Diethylaminopropylamin zugefügt und der Ansatz bei 80 $^\circ$ C bis zu einem Epoxidwert von praktisch 0 reagiert. Der Ansatz wird mit 200 Tlen Propylenglykolmonomethylether verdünnt und mit 97 Tlen 3 n-Ameisensäure partiell neutralisiert.

70 Tle Festharz dieses Bindemittels werden anschließend mit 30 Tlen Festharz der nachfolgend beschriebenen Härtungskomponente bei 60°C 1 Stunde homogenisiert.

Herstellung der Vernetzungskomponente: 396 Tle Malonsäuredimethylester und 134 Tle Trimethylolpropan werden in Gegenwart von 1,1 Tlen Zinkoctoat (8 % Metallgehalt) bei 130°C ca. 10 Stunden lang umgesetzt, wobei etwa 90 Tle Methanol als Destillat entweichen. Der fertige polyfunktionelle Ester ist eine farblose Flüssigkeit mit einer Hydroxylzahl von 16 mg KOH/g.

Komponente A3

In einem mit Rührer, Thermometer und Rückflußkühler ausgestatteten Reaktionsgefäß werden 1000 Tle eines Epoxidharzes auf Bisphenol A-Basis (Epoxidäquivalent ca. 500) in 492 Tlen Ethylglykolacetat bei 60 bis 70°C gelöst, 0.2 Tle Hydrochinon und 144 Tle Acrylsäure zugegeben und die Temperatur auf 100 bis 110°C gesteigert. Die Reaktion wird bei dieser Temperatur bis zu einer Säurezahl von unter 5 mg KOH/g geführt (DBZ = 1,75). Anschließend wird das Reaktionsprodukt bei 60 bis 70°C mit 652 Tlen BMI (70 %) [*] versetzt und bis zu einem NCO-Wert von praktisch. Null reagiert (DBZ = 1,25, BNZ = 1,1).

([*] Basisches Monoisocyanat aus 1 Mol Toluylendiisocyanat und 1 Mol Diethanolamin (70%ig in Methylisobutylketon))

DBZ: Doppelbindungszahl:

entspricht der Anzahl der endständigen ethylenischen Doppelbindungen pro 1000 Molekulargewichtseinheiten.

BNZ: Basenzahl:

entspricht der Anzahl der basischen N-Gruppierungen pro 1000 Molekulargewichtseinheiten.

Komponente A 4

700 Tle B 180 [**] werden in bekannter Weise in Gegenwart von 0,5 Tlen Diphenylparaphenylendiamin (Inhibitor) bei 200°C mit 100 Tlen Maleinsäureanhydrid so lange reagiert, bis dieses vollständig gebunden ist. Nach Kühlen auf 100°C werden 130 Tle 2-Ethylhexanol zugesetzt und bei 120°C bis zum Erreichen der theoretischen Säurezahl des Halbesters verestert (MAD A).

([**] B 180 ist ein flüssiges Polybutadienöl (ca. 75 % 1,4 cis-, ca. 24 % 1,4-trans- und ca. 1 % Vinyldoppelbindungen; Molekulargewicht ca. 1500 ± 15 %; Jodzahl ca. 450 g 100 g).)

110 Tle MAD A (entsprechend ca. 0,12 COOH-Gruppen) werden mit 212 Tlen eines Bisphenol A-Diepoxidharzes (Epoxidäquivalent ca. 190) in 80%iger Lösung in Diethylenglykoldimethylether bei 120°C bis zu einer Säurezahl von praktisch Null umgesetzt. Nach Zusatz von 108 Tlen Diethylenglykoldimethylether, 59 Tlen Diethylaminopropylamin (0,45 Mol) und 59 Tlen 2-Ethylhexylamin (0,45 Mol) wird der Ansazt bei 65 bis 70°C bis zu einem Epoxidwert von praktisch Null reagiert. Nach Erreichen dieses Wertes werden 114 Tle Bisphenol A (0,5 Mol) und 50 Tle Paraformaldehyd, 91 % (1,5 Mol) zugegeben und die Reaktion bei 60°C bis zum Erreichen eines Gehaltes an freiem Formaldehyd von 0,5 bis 1 % geführt.

Herstellung der Komponente (B)

Als phenolische Hydroxylgruppen tragende Verbindungen werden folgende Komponenten eingesetzt:

PH 1 Nonylphenol

PH 2 Umsetzungsprodukt eines Diepoxidharzes auf Basis Polypropylenglykol (Epoxid-Äquivalentgewicht 200) mit Hydrochinon (Phenol-Äquivalentgewicht 310)

PH 3 4-kerniger Novolak, erhalten aus 4 Mol Butylphenol und 3 Mol Formaldehyd (Phenol-Äquivalentgewicht 160)

PH 4 Aminoalkylierungsprodukt analog AT-PS 382.160 aus 220 Tlen (1 Mol) Diethylaminopropylamin, 33 Tlen (1 Mol) Paraformalyehyd 91 % und 304 Tlen (1 Mol) eines mit 2-Ethylhexanol halbblockierten Toluylendiisocyanates (Phenol-Äquivalentgewicht 666)

Die Mengenverhältnisse der Ausgangsprodukte sowie der resultierende Titangehalt sind in Tab. 1 zusammengefaßt. (TIV = Titanverbindung)

Tab. 1

| TIV | Phenolkomponente | | Titanverbindung | | Feststoff (%) Lösemittel | | Ti-Gehalt/FH |
|---|---|---|---|---|---|---|---|
| 1 | 880 | PH1 | 340 | BuTi | 80 | MP | 5,2 |
| 2 | 1240 | PH2 | 340 | BuTi | 80 | MP | 3,7 |
| 3 | 480 | PH3 | 364 | Tiac | 70 | ACAC | 9,1 |
| 4 | 2664 | PH4 | 340 | BuTi | 70 | MP | 1,8 |
| BuTi = Tetra-n-butylorthotitanat = Ti (O-n- Butyl)$_4$ | | | | | | | |
| Tiac = Titan-Acetylacetonat = Ti(O-isopropyl)$_2$(acetylacetonat)$_2$ | | | | | | | |
| MP = Methoxypropanol | | | | | | | |
| ACAC = Acetylaceton | | | | | | | |

## Herstellung der pigmentierten erfindungsgemäßen Lacke

Aus den Komponenten A 1 bis A 4 und den Titanverbindungen TIV 1 - 4 werden unter Verwendung einer Pigmentmischung aus 1 Tl Farbruß und 99 Tlen Titandioxid die in Tab. 2 angegebenen Lacke hergestellt. Die Einstellung der Lacke auf einen Festkörpergehalt von 20 % erfolgt mit deionisiertem Wasser.

Tab. 2

| Lack Nr. Beispiel | Tle A | Tle TIV | Pigment-Bindemittel-Verhältnis | Neutr. * | Ti-Gehalt |
|---|---|---|---|---|---|
| 1 | 85 A 1 | 15 TIV 1 | 0,5 : 1 | 45 | 0,78 |
| 2 | 95 A 2 | 5 TIV 2 | 0,4 : 1 | 50 | 0,19 |
| 3 | 92 A 3 | 8 TIV 3 | 0,5 : 1 | 60 | 0,73 |
| 4 | 70 A 4 | 30 TIV 4 | 0,6 : 1 | 40 | 0,54 |
| 5 | 85 A 1 | 15 TIV 3 | 0,35 : 1 | 50 | 1,37 |
| 6 | 95 A 4 | 5 TIV 1 | 0,5 : 1 | 45 | 0,26 |
| 7 | 88 A 3 | 12 TIV 4 | 0,4 : 1 | 60 | 0,22 |
| 8 | 85 A 1 | 15 TIV 2 | 0,5 : 1 | 50 | 0,56 |

* Millimol Essigsäure pro 100 g Festharz

## Prüfung der erfindungsgemäßen Lacke und Vergleichsbeispiele

Die Abscheidung erfolgt auf ein als Kathode geschaltetes nicht phosphatiertes Stahlblech unter Bedingungen, unter welchen eine Trockenfilmstärke von 20 ± 2 μm erhalten wird. Die Härtung erfolgt durch Einbrennen im Umluftofen (25 Minuten/170° C).

Die in der Tabelle 3 angegebenen Prüfwerte für den Salzsprühtest (ASTM B 117-73) geben den Angriff am Kreuzschnitt in Millimeter nach 240 Stunden an. Als Vergleichsbeispiele wurden die Lacke LA 1 bis LA 4 ohne Komponente (B) abgeschieden und geprüft. Die entsprechenden Werte für den Salzsprühtest liegen bei einem Angriff zwischen 40 und 70 mm.

Tabelle 3

| Beispiel | Salzsprühtest mm 240 Stunden | |
|---|---|---|
| 1 | weniger als | 0,5 |
| 2 | weniger als | 1 |
| 3 | weniger als | 0,5 |
| 4 | weniger als | 1 |
| 5 | weniger als | 0,5 |
| 6 | weniger als | 1,5 |
| 7 | weniger als | 1,5 |
| 8 | weniger als | 1 |

**Ansprüche**

1. Kathodisch abscheidbare Elektrotauchlacke, dadurch gekennzeichnet, daß sie als Bindemittel in partiell oder vollständig neutralisierter Form

(A) 70 bis 99.5 Gew.-%, vorzugsweise 80 bis 95 Gew.-%, eines kationischen filmbildenden Harzes sowie eines gegebenenfalls anteilig vorhandenen Zusatzharzes und oder Pigmentanreibeharzes und

(B) 0.5 bis 30 Gew.-%, vorzugsweise 5 bis 20 Gew.-%, eines Umsetzungsproduktes eines Tetraalkylorthotitanates und oder eines Titanacetylacetonates mit mindestens eine phenolische Hydroxylgruppe aufweisenden Verbindungen

enthalten, mit der Maßgabe, daß der Titangehalt der Kombination, bezogen auf Bindemittelfestkörpergehalt, 0,03 bis 3,0, vorzugsweise 0,1 bis 1,0 Gew.-% beträgt.

2. Kathodisch abscheidbare Elektrotauchlacke nach Anspruch 1, dadurch gekennzeichnet, daß als Phenolverbindungen für die Komponente (B) alkyl-, aryl- oder aralkylsubstituierte Mono- oder Polyphenole vorlieggen.

3. Kathodisch abscheidbare Elektrotauchlacke nach Anspruch 1, dadurch gekennzeichnet, daß als Phenolverbindungen für die Komponente (B) Phenol-Formaldehyd-Kondensate vom Resol- oder Novolak-Typ oder Aminoalkylierungsprodukte von Mono- und/oder Diphenolen vorliegen.

4. Kathodisch abscheidbare Elektrotauchlacke nach Anspruch 1, dadurch gekennzeichnet, daß als Titanverbindungen für die Komponente (B) Tetraalkylorthotitanate oder Titanacetylacetonate der allgemeinen Formel Ti (O-alkyl)$_n$ (acetylacetonat)$_2$ (n = 0 oder 2) vorliegen.

5. Verfahren zur Herstellung von kathodisch abscheidbaren Elektrotauchlacken nach den Ansprüchen 1 bis 4, dadurch gekennzeichnet, daß die Zugabe der Komponente (B) zu einer wasserfreien Form der Komponente (A) oder zu einem mitverwendeten Zusatzharz oder Pigmentanreibeharz erfolgt.

6. Verfahren zur Herstellung von kathodisch abscheidbaren Elektrotauchlacken nach den Ansprüchen 1 bis 4, dadurch gekennzeichnet, daß bei Anwesenheit von protonierbaren Gruppen in der Komponente (B) die Zugabe der protonierten Komponente in einer wäßrigen und/oder lösemittelhältigen Form, gegebenenfalls während des Betriebes des ETL-Bades, erfolgt.